# EUROPÄISCHE PATENTANMELDUNG

(11) **EP 2 647 596 A2**
(43) Veröffentlichungstag der Anmeldung: **09.10.2013**
(21) Anmeldenummer: 13175400.4
(22) Anmeldetag: 13.08.2009
(51) Int. Cl.: C01B 3/06, C01B 33/023, C01B 33/12, C25B 1/04, C25B 15/00

(54) **Verfahren und Anlage zum Bereitstellen eines Energieträgers unter Einsatz von Kohlenstoffdioxid als Kohlenstofflieferant und von elektrischer Energie**

(30) Priorität: 18.12.2008 WO PCT/EP2008/067895; 04.03.2009 EP 09154271
(62) Teilanmeldung aus: 09781782.9
(71) Anmelder: Silicon Fire AG, 6045 Meggen (CH)
(72) Erfinder: GRAUER, Peter, 6045 Meggen (CH); MEYER-PITTROFF, Roland, 85354 Freising (DE)
(74) Vertreter: OK pat AG

(57) **Zusammenfassung**

Die Erfindung betrifft Verfahren und Anlagen (100) zum Bereitstellen speicherbarer und transportabler kohlenstoff-basierter Energieträger (108) unter Einsatz von Kohlenstoffdioxid (101) als Kohlenstofflieferant und unter Einsatz von elektrischer Energie (E1, E2). Die Anlage (100) umfasst eine Anlage (300, 301; 400) zum Erzeugen eines ersten Energieanteils in Form von Gleichstromenergie (E1) aus erneuerbaren Energiequellen. Außerdem ist eine Energieversorgungsanlage (501) zum Anbinden der Anlage (100) an ein Verbundnetz (500) vorgesehen, wobei die Energieversorgungsanlage (501) aus Wechselspannung des Verbundnetzes (500) einen zweiten Energieanteil in Form von Gleichstromenergie (E2) erzeugt. Eine Vorrichtung (102, 105) ist zum Bereitstellen von Wasserstoff (103) ausgelegt, wobei ein Teil des Energiebedarfs dieser Vorrichtung (102, 105) durch den ersten Energieanteil und ein anderer Teil durch den zweiten Energieanteil gedeckt wird. Eine Kohlendioxidzufuhr dient zum Einbringen von Kohlendioxid (101) und ein Reaktionsbereich (106) wird zum Herstellen eines Kohlenwasserstoffs, vorzugsweise von Methanol (108), bereitgestellt.

## Beschreibung

Die vorliegende Anmeldung betrifft Verfahren und Anlagen zum Bereitstellen speicherbarer und transportabler kohlenstoff-basierter Energieträger unter Einsatz von Kohlenstoffdioxid als Kohlenstofflieferant und unter Einsatz von elektrischer Energie.

Es werden die Prioritäten der folgenden Anmeldungen beansprucht:
- internationale Patentanmeldung PCT/EP2008/067895 mit Anmeldedatum 18. Dezember 2008;
- provisorische europäische Patentanmeldung EP 09 154 271.2
- mit Anmeldedatum 4. März 2009.

Kohlenstoffdioxid CO₂ (meist Kohlendioxid genannt) ist eine chemische Verbindung aus Kohlenstoff und Sauerstoff. Kohlendioxid ist ein farb- und geruchloses Gas. Es ist mit einer geringen Konzentration ein natürlicher Bestandteil der Luft und entsteht in Lebewesen bei der Zellatmung, aber auch bei der Verbrennung von kohlenstoffhaltigen Substanzen bei ausreichender Anwesenheit von Sauerstoff. Seit Beginn der Industrialisierung steigt der CO₂-Anteil in der Atmosphäre deutlich an. Hauptursache hierfür sind die vom Menschen verursachten - die sogenannten anthropogenen - CO₂-Emissionen. Das Kohlendioxid in der Atmosphäre absorbiert einen Teil der Wärmestrahlung. Diese Eigenschaft macht Kohlendioxid zu einem so genannten Treibhausgas (THG) und ist einer der Mitverursacher des globalen Treibhauseffekts.

Aus diesen und auch aus anderen Gründen wird zur Zeit in verschiedenste Richtungen geforscht und entwickelt, um einen Weg zu finden, um die anthropogenen CO₂-Emissionen zu reduzieren. Besonders im Zusammenhang mit der Energieerzeugung, die häufig durch das Verbrennen fossiler Energieträger, wie Kohle, Öl oder Gas, erfolgt, aber auch mit anderen Verbrennungsprozessen, zum Beispiel der Müllverbrennung, besteht ein großer Bedarf zur CO₂ Reduktion. Es werden pro Jahr über 20 Milliarden Tonnen CO₂ durch solche Prozesse in die Atmosphäre abgegeben.

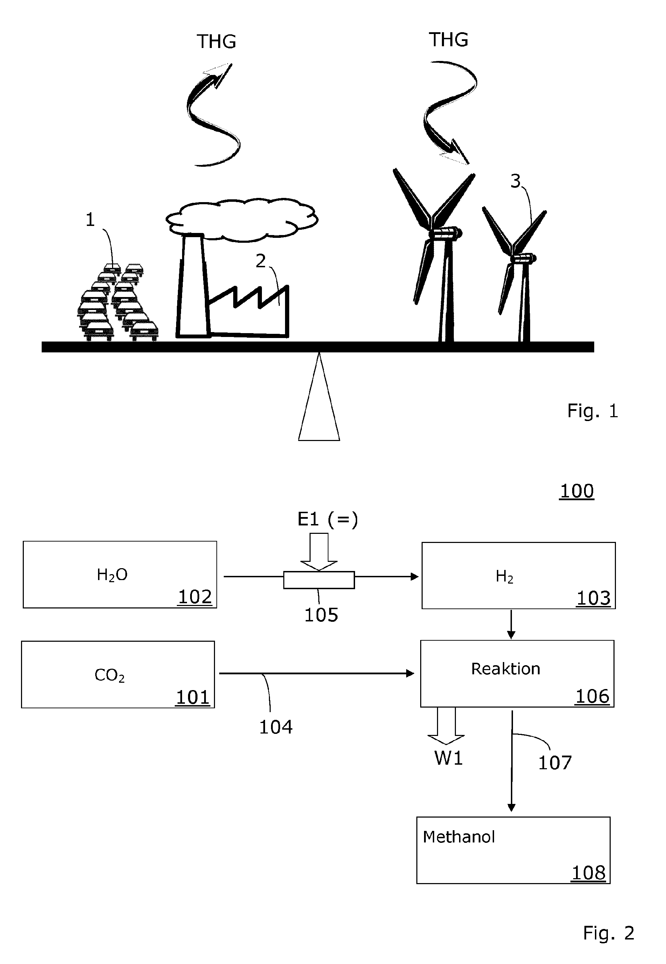

Es wird unter anderem das Prinzip der Klimaneutralität angestrebt, indem Ansätze verfolgt werden, bei denen man versucht, die Energieerzeugung mit CO₂-Emissionen durch alternative Energien zu kompensieren. Dieser Ansatz ist stark schematisiert in Fig. 1 dargestellt. Emittenten von Treibhausgasen (THG), wie Industrieunternehmen (z.B. Automobilhersteller) 1 oder Kraftwerksbetreiber 2, investieren oder betreiben z.B. Windfarmen 3 an anderen Standorten im Rahmen von Ausgleichsprojekten, um dort Energie ohne THG-Emissionen zu erzeugen. Rein rechnerisch kann sich damit eine Klimaneutralität ergeben. Zahlreiche Firmen versuchen, sich auf diesem Weg eine "klimaneutrale" Weste zu erkaufen.

Wind- und Solarkraftwerke, die erneuerbare Energien in elektrische Energie umwandeln, haben eine instationäre Leistungsabgabe, was einen Anlagenbetrieb gemäß den Anforderungen eines elektrischen Verbundnetzes außerordentlich erschwert und Anlage- und Betriebskosten für zusätzliche Reserve- und Frequenzregel-Anlagen bedingt. Die Stromerzeugungskosten von Wind- oder Solarkraftwerken werden dadurch gegenüber Kraftwerken, die den Leistungsanforderungen des Verbundnetzes unmittelbar folgen können, entsprechend wesentlich erhöht.

Es wird als Problem angesehen, dass z.Z. nahezu alle regenerative elektrische Energie, die erzeugt wird, in das öffentliche Wechselspannungs-Verbundnetz eingespeist wird, dessen Frequenz nur innerhalb sehr enger Grenzen schwanken darf (z.B. +/- 0,4 %). Das kann nur erreicht werden, wenn die Stromerzeugung im Netz immer praktisch gleich dem Verbrauch ist. Die Notwendigkeit, für Wind- und Solarkraftwerke immer die ausreichenden Reserve- und Frequenzregelkapazitäten vorhalten zu müssen, führt zur entsprechenden Verteuerung der Stromerzeugung mit diesen Anlagen. Wind- und Solarkraftwerke im elektrischen Verbundnetz ziehen somit weitere "versteckte" Kosten und Probleme nach sich.

Bereits beim heutigen Ausbaustand von Windkraftwerken in vielen Ländern kann das elektrische Energieversorgungsnetz vor ernste Probleme gestellt werden, wenn z.B. infolge von Windmangel oder Starkwind die Windleistung in großem Umfang ausfällt, vor allem wenn dieser Ausfall plötzlich und unerwartet erfolgt. In jedem Fall sind aber der installierten Wind- und Solarleistung angepasste Reserve- und Frequenzregelkapazitäten notwendig.

Daraus folgt, dass Solar- und Windkraftwerke, die in ein elektrisches Verbundnetz einspeisen, kaum die installierten Leistungen anderer Kraftwerke im Verbundnetz ersetzen können. Das führt dazu, dass Solar- und Windstrom in etwa nur mit den ersparten Brennstoffkosten der anderen, im Netz vorhandenen Wärmekraftwerke bewertet werden kann.

Es stellt sich nun die Aufgabe, ein Verfahren bereit zu stellen, das in der Lage ist, speicherbare kohlenwasserstoff-basierte Energieträger, zum Beispiel als Kraft- oder Brennstoffe, zu erzeugen. Die Bereitstellung dieser Energieträger sollte mit möglichst minimalem zusätzlichem Ausstoß von CO₂ erfolgen, und der Einsatz dieser Energieträger sollte zu einer Reduzierung des Ausstoßes von CO₂ beitragen.

Gemäß Erfindung werden ein Verfahren und eine Anlage (Vorrichtung) zum Bereitstellen speicherbarer und transportabler Energieträger bereit gestellt.

Gemäß einer ersten Ausführungsform der Erfindung wird Kohlendioxid als Kohlenstofflieferant eingesetzt. Vorzugsweise wird das Kohlendioxid aus einem Verbrennungsprozess oder einem Oxidationsprozess von Kohlenstoff mittels CO₂-Abscheidung entnommen. Es wird elektrische Gleichstromenergie bereitgestellt. Die Gleichstromenergie wird weitgehend mittels erneuerbaren Energien erzeugt, und sie wird zum Durchführen einer Elektrolyse eingesetzt, um Wasserstoff als Zwischenprodukt zu erzeugen. Das Kohlendioxid wird dann mit dem Wasserstoff zur Reaktion gebracht, um diese Produkte zu Methanol oder einem anderen Kohlenwasserstoff umzusetzen.

Bei einer anderen bevorzugten Ausführungsform findet eine Transformation von siliziumdioxidhaltigem Ausgangsmaterial in einem Reduktionsverfahren zu Silizium statt, wobei die Energie für dieses Reduktionsverfahren weitgehend aus erneuerbaren Energien bereitgestellt wird. Ein Teil der Reaktionsprodukte dieses Reduktionsverfahrens wird dann in dem Prozess zur Methanolherstellung eingesetzt, wobei bei diesem Prozess zur Methanolherstellung Synthesegas aus Kohlendioxid und Wasserstoff zum Einsatz kommt, wie erwähnt. Die Umsetzung von siliziumdioxidhaltigem Ausgangsmaterial zu Silizium lässt sich als ergänzender Verfahrensschritt zu dem beanspruchten Verfahren ausführen oder mit diesem kombinieren.

Gemäß Erfindung wird ein möglichst konstanter und langzeitiger Anlagenbetrieb einer entsprechenden Silicon-Fire Anlage angestrebt, was durch Ergänzung der regenerativen Stromversorgung mit einer konventionellen (z.B. fossilen) Stromversorgung aus einem Verbundnetz erzielt wird. Vorzugsweise wird die konventionelle Stromversorgung gemäß Erfindung insbesondere während der Schwachlastzeiten des elektrischen Verbundnetzes zugeschaltet. D.h., dass z.B. ein Wind- und/oder Solarkraftwerk und die erfindungsgemäße Silicon-Fire Anlage mit dem bestehenden elektrischen Verbundnetz möglichst wirtschaftlich und ökologisch optimal miteinander verknüpft werden, so dass
- der Gesamtertrag der Reaktionsprodukte möglichst maximal wird;
- und/oder die CO₂-Emission möglichst minimal wird;
- und/oder eine möglichst konstante und langzeitige Anlagenauslastung erzielt wird;
- und/oder die produktspezifischen Investitions- und Betriebskosten des regenerativen Kraftwerkes und der Silicon-Fire Anlage möglichst minimal werden.

Die elektrische Energie aus Wind- und/oder Solarkraftwerken wird gemäß Erfindung nicht in ein Verbundnetz eingespeist, sondern direkt in einer Silicon-Fire Anlage in speicher- und transportierbare Energieformen (vorzugsweise in Kohlenwasserstoffe, wie z.B. Methanol) umgewandelt. D.h., es werden die erneuerbaren Energien auf chemischem Wege in speicher- und transportierbare Energieformen überführt.

Es ist ein weiterer Vorteil des Überführens in speicher- und transportierbare Energieformen, dass die Energieumwandlungseffizienz erhöht wird, da bei Photovoltaikanlagen keine Wechselrichter zum Erzeugen von Wechselspannung erforderlich sind und generell ein verlustbehafteter Ferntransport der elektrischen Energie über längere Hochspannungsleitungen nicht erforderlich ist.

Die Erzeugungskosten der erneuerbaren elektrischen Energie aus Solar- und Windkraftwerken sind auf absehbare Zeit relativ hoch. Das führt dazu, dass auch bei direkter Nutzung dieser elektrischen Energie für chemische Prozesse, wie hier vorgeschlagen, die allein damit erzeugten chemischen Produkte gegenüber den konventionell - in der Regel fossil - hergestellten Produkten teurer sind. Dies gilt vor allem dann, wenn die echten Umweltschäden, die z.B. ein fossiles Kraftwerk verursacht nicht internalisiert, d.h. in der Gesamtbilanz berücksichtig werden.

Um diesen Nachteil zu vermindern, wird bei der erfindungsgemässen Silicon-Fire Anlage vorzugsweise eine wirtschaftlich und ökologisch möglichst optimale Kombination regenerativer und konventioneller Stromversorgung in Vernetzung mit einem vorhandenen elektrischen Verbundnetz realisiert. Das Silicon-Fire Anlagenkonzept sieht daher in einer bevorzugten Ausführungsform vor, regenerative elektrische Energie weitgehend direkt entsprechend ihrem Anfall und elektrische Energie aus einem elektrischen Verbundnetz vor allem zu dessen Schwachlastzeiten für chemische Reaktionen zu nutzen und damit auch zu speichern. In Zeiten elektrischen Spitzenbedarfs im elektrischen Verbundnetz kann die regenerative Energie - zur Erzielung höherer Erlöse - auch in das Verbundnetz eingespeist werden. Diese Einspeisung ist optional.

Vorzugsweise wird, anstatt die instationär anfallende regenerative elektrische Energie aus Wind- und/oder Solarkraftwerken in ein elektrisches Verbundnetz einzuspeisen und deren Schwankungen und Ausfälle durch andere Kraftwerke oder Speicheranlagen auszugleichen und auszuregeln, mit der elektrischen Energie der Wind- oder Solarkraftwerke eine chemische Silicon-Fire Anlage betrieben, um speicher- und transportierbare Energieformen zu erzeugen. Falls eine entsprechende Silicon-Fire Anlage mit einem Verbundnetz verknüpft ist, um einen Teil der elektrischen Energie aus dem Verbundnetz zu beziehen, dann kann mittels einer intelligenten Anlagenregelung oder -steuerung ein momentan verfügbarer überschüssiger Energieanteil aus dem Verbundnetz bezogen werden, während der restliche benötigte Energieanteil aus der anlagenzugehörigen Solar- und/oder Windkraftanlage bezogen wird. Hier kommt es also zu einer intelligenten Umkehrung des bisherigen Prinzips, bei dem die Schwankungen der regenerativen Stromerzeugung von Wind- und/oder Solarkraftwerken durch Zuschalten konventioneller Kraftwerke und/oder Speicheranlagen abgefangen werden müssen. Man braucht daher zum Betreiben einer Silicon-Fire Anlage keine Regelungs- und Leistungsreserven im elektrischen Verbundnetz vorzuhalten. Dieses Prinzip führt zu wesentlichen Kostenreduktionen und ermöglicht es dem Betreiber einer Silicon-Fire Anlage, zusätzliche technische und wirtschaftliche Parameter bei der Steuerung der Anlage einzubeziehen.

Außerdem werden Regelung und Steuerung der Anlagenstromversorgung deutlich einfacher und zuverlässiger, da die Entscheidungshoheit darüber im Verantwortungsbereich des Betreibers der Silicon-Fire Anlage liegt. Bei einem konventionellen Verbundnetz, das Strom aus erneuerbaren Energieanlagen und konventionellen Anlagen bezieht, sind zahlreiche Partner involviert, was das regelungs- und steuerungstechnische Verknüpfen der Anlagen und das Fällen von Entscheidungen sehr komplex macht, was in der jüngeren Vergangenheit beispielsweise auch zu Vorsorgungsausfällen geführt hat.

Die Produktion der speicher- und transportierbaren Energieform kann jederzeit heruntergefahren oder gar unterbrochen werden. Dies geschieht vorzugsweise dann, wenn im elektrischen Verbundnetz ein Spitzen-Energiebedarf besteht. Der "chemische Teil" der Silicon-Fire Anlage kann relativ einfach und schnell heruntergefahren oder abgeschaltet werden. Auch hier liegt die Entscheidungshoheit im Verantwortungsbereich des Betreibers der Silicon-Fire Anlage.

Als zusätzlicher Energiepuffer kann die Energieform dienen, die mit der Silicon-Fire Anlage bereitgestellt wird. So kann zum Beispiel Methanol gespeichert werden, um bei Spitzen-Energiebedarf im elektrischen Verbundnetz zusätzlich elektrische Energie zur Verfügung stellen zu können. Methanol kann bei Bedarf zum Beispiel in Wärmekraftwerken verbrannt werden, oder es kann damit in Brennstoffzellen (z.B. Direkt-Methanol Brennstoffzellen; MFC genannt) elektrische Energie erzeugt werden.

Die vorliegende Erfindung basiert auf der Wasserstofferzeugung mit Hilfe elektrischer Energie weitmöglich aus Wind- und/oder Solarkraftwerken in Kombination mit der unmittelbaren Umsetzung des Wasserstoffs zu einem Kohlenwasserstoff. Wasserstoff wird also nicht gelagert oder hoch verdichtet oder gekühlt und über größere Strecken transportiert, sondern dient als Zwischenprodukt, das am Standort seiner Erzeugung umgesetzt wird. Einem energieumwandelnden Prozess, bei dem Sonnenenergie oder Windkraft in elektrische Energie umgewandelt wird, folgen gemäß Erfindung stoffumwandelnde (chemische) Prozesse, nämlich die intermediäre Bereitstellung von Wasserstoff und die Umwandlung des Wasserstoffs zusammen mit Kohlendioxid zu einem Kohlenwasserstoff (z.B. Methanol).

Unter Beachtung entsprechender energietechnischer, anlagentechnischer und wirtschaftlicher Vorgaben, zusammen mit der Forderung nach schonender Nutzung aller stofflichen, energetischen und ökonomischen Ressourcen, wird gemäß Erfindung eine neue energietechnische Lösung bereitgestellt.

Weitere vorteilhafte Ausführungsformen sind der Beschreibung, den Figuren und den abhängigen Ansprüchen zu entnehmen.

In den Zeichnungen sind verschiedene Aspekte der Erfindung schematisch dargestellt, wobei die Zeichnungen zeigen:
- Fig. 1:: ein Schema, welches das Prinzip der Klimaneutralität durch die Investition in oder das Betreiben von Ausgleichsprojekten darstellt;
- Fig. 2:: ein Schema, das die grundlegenden Schritte eines ersten erfindungsgemäßen Verfahrens, respektive einer entsprechenden Silicon-Fire Anlage, zeigt;
- Fig. 3:: ein Schema, das die grundlegenden Schritte eines zweiten erfindungsgemäßen Verfahrens, respektive einer entsprechenden Silicon-Fire Anlage, zeigt;
- Fig. 4:: ein Schema, das die grundlegenden Schritte eines weiteren erfindungsgemäßen Verfahrens, respektive einer entsprechenden Silicon-Fire Anlage, zeigt;
- Fig. 5:: ein Schema, das die Schritte eines weiteren erfindungsgemäßen Teilverfahrens zeigt;
- Fig. 6:: ein Schema, das die Schritte eines weiteren erfindungsgemäßen Teilverfahrens zeigt.

Das erfindungsgemäße Verfahren basiert auf einem neuartigen Konzept, welches unter Verwendung vorhandener Ausgangsstoffe sogenannte Reaktionsprodukte bereitstellt, die entweder direkt als Energieträger einsetzbar sind, oder die indirekt, d.h. nach dem Ausführen weiterer Zwischenschritte, als Energieträger einsetzbar sind.

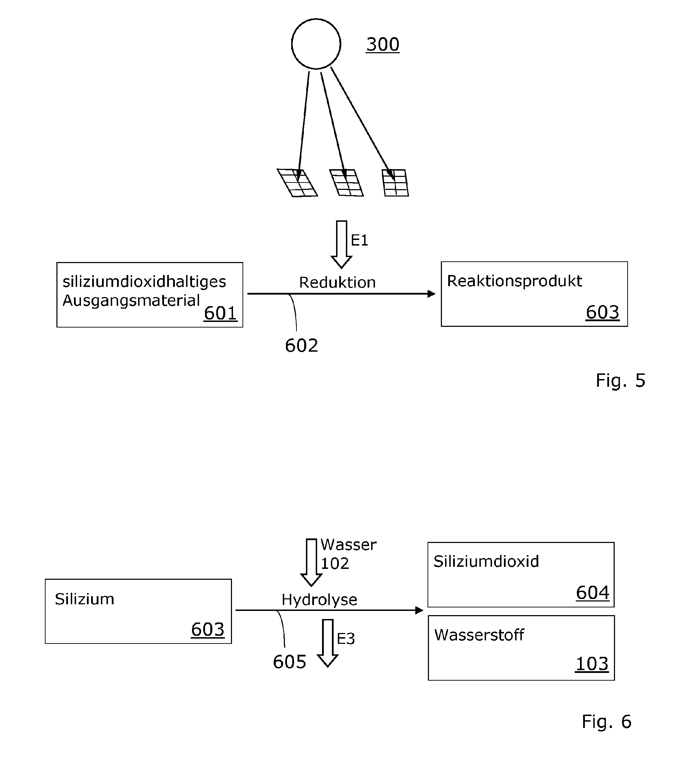

Der Begriff Energieträger wird hier verwendet für Stoffe, die entweder direkt als Kraftstoff oder Brennstoff eingesetzt werden können (wie z.B. Methanol 108), und auch für Stoffe (wie z.B. Silizium 603), die einen Energiegehalt oder ein erhöhtes Energieniveau haben und die in weiteren Schritten unter Abgabe von Energie (siehe Energie E3 in Fig. 6) und/oder unter Abgabe eines weiteren Energieträgers (wie z.B. Wasserstoff 103) umgesetzt werden können.

Die Transportfähigkeit des Energieträgers wird hier durch das chemische Reaktionspotenzial gekennzeichnet.

Im Falle von Kohlenwasserstoffen (wie Methanol 108) als Energieträger sollten gewisse Rahmenbedingungen beim Lagern und beim Transport eingehalten werden, die ähnlich sind wie die Bedingungen zur Handhabung von fossilen Brennstoffen. Hier kann problemlos die existierende Infrastruktur benutzt werden. Lediglich auf der Materialseite können gewisse Anpassungen erforderlich sein.

Im Falle von Silizium 603 als Energieträger sollten gewisse Rahmenbedingungen beim Lagern und beim Transport eingehalten werden, um keine unerwünschte oder unkontrollierte Reaktion (Oxidation) des Siliziums auszulösen. Das Silizium 603 sollte vorzugsweise trocken gelagert und transportiert werden. Außerdem sollte das Silizium 603 nicht erwärmt werden, da sonst die Wahrscheinlichkeit einer Reaktion mit Wasserdampf aus der Umgebungsluft oder mit Sauerstoff zunimmt. Untersuchungen haben ergeben, dass Silizium bis zu ca. 300 Grad Celsius nur eine sehr geringe Neigung zur Reaktion mit Wasser oder Sauerstoff hat. Ideal ist das Lagern und Transportieren des Siliziums 603 zusammen mit einem Wassergetter (d.h. einem Stoff der wasseranziehend ist) und/oder einem Sauerstoffgetter (d.h. einem Stoff der sauerstoffanziehend ist).

Der Begriff siliziumdioxidhaltiges Ausgangsmaterial 601 wird hier verwendet für Stoffe, die einen großen Anteil von Siliziumdioxid (SiO₂ enthalten. Besonders geeignet sind Sand und Schiefer (SiO₂ + [CO₃ ]²). Sand ist ein natürlich vorkommendes, unverfestigtes Sedimentgestein und kommt in mehr oder weniger großer Konzentration überall auf der Erdoberfläche vor. Ein Großteil der Sandvorkommen besteht aus Quarz (Siliziumdioxid; SiO₂).

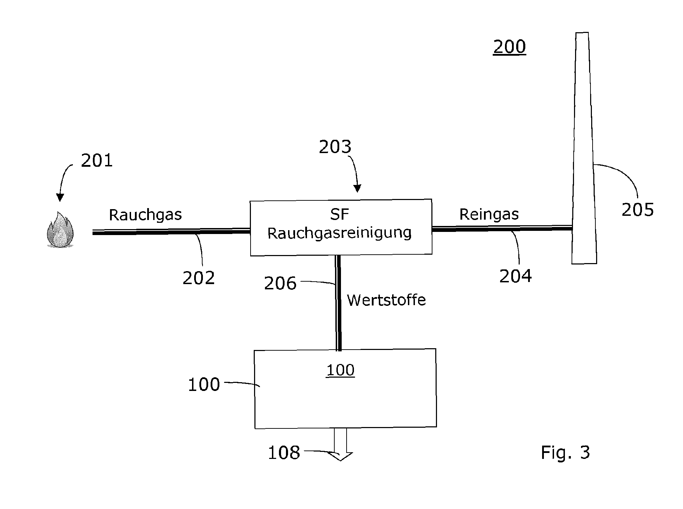

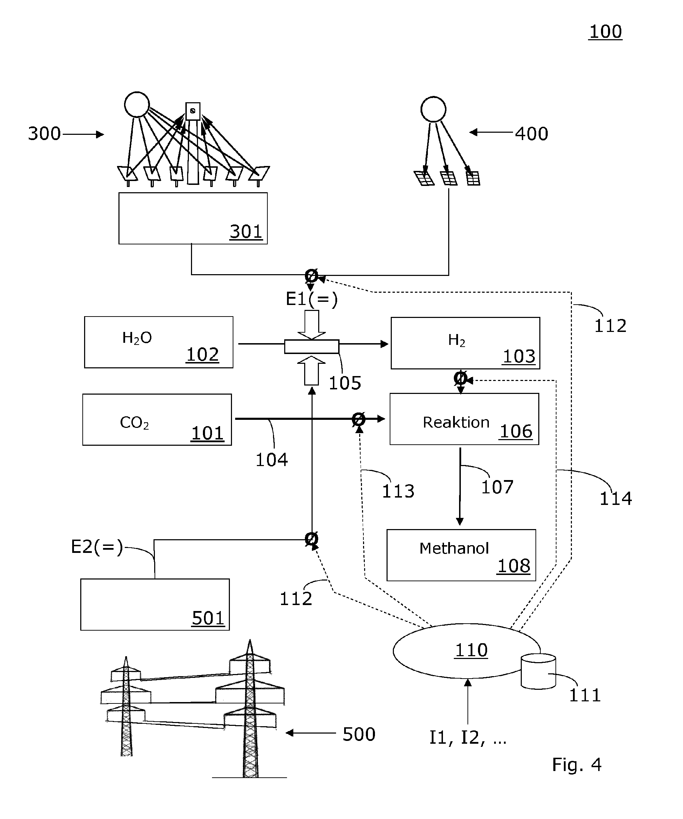

Gemäß einer ersten Ausführungsform der Erfindung wird Kohlendioxid 101 als Kohlenstofflieferant eingesetzt, wie in Fig. 2 schematisch angedeutet. Vorzugsweise wird das Kohlendioxid 101 aus einem Verbrennungsprozess 201 (in Fig. 3 durch ein Feuer symbolisiert) oder einem Oxidationsprozess über CO₂-Abscheidung (z.B. eine Silicon-Fire Rauchgasreinigungsanlage 203) entnommen. Weiterhin wird elektrische Gleichstromenergie E1 bereitgestellt. Die Gleichstromenergie E1 wird weitgehend regenerativ (z.B. durch eine der Anlagen 300 oder 400 in Fig. 4) erzeugt. Die Gleichstromenergie E1 wird zum Durchführen einer Elektrolyse eingesetzt, um Wasserstoff 103 als Zwischenprodukt zu erzeugen. Die Elektrolyseanlage, respektive das Durchführen einer solchen Elektrolyse, ist in Fig. 2 durch das Bezugszeichen 105 gekennzeichnet. Das Kohlendioxid 101 wird dann mit dem Wasserstoff 103 zur Reaktion (z.B. durch eine Methanolsynthese) gebracht, um die (Zwischen-)Produkte 101, 103 zu Methanol 108 oder zu einem anderen Kohlenwasserstoff umzusetzen. Die Reaktion kann in einem Reaktionsbehälter 106 durchgeführt werden, und die Entnahme, respektive das Bereitstellen des Methanols, ist in Fig. 2 durch das Bezugszeichen 107 gekennzeichnet.

Im Folgenden werden weitere grundlegende Details dieses Verfahrens und der entsprechenden Silicon-Fire Anlage 100 beschrieben.

Um Wasserstoff 103 als Zwischenprodukt erzeugen zu können, eignet sich eine Wasser-Elektrolyse unter Einsatz von Gleichstrom E1. Der benötigte Wasserstoff 103 wird in einer Elektrolyseanlage 105 durch die Elektrolyse von Wasser H₂O hergestellt:

H₂O - 286,02 kJ = H₂ + 0,5 O₂. (Reaktion 1)

Die benötigte (elektrische) Energie E1 für diese Reaktion von 286,02 kJ/mol entspricht 143000 kJ pro kg H₂.

Die Synthese des Methanols 108 (CH₃OH) verläuft in der Silicon-Fire Anlage 100 nach der exothermen Reaktion zwischen Kohlendioxid 101 (CO₂) und Wasserstoff 103 (H₂), wie folgt:

CO₂ + 3H₂ = CH₃OH +H₂O - 49,6 kJ (Methanol gasförming). (Reaktion 2)

Die entstehende Reaktionswärme W1 von 49,6 kJ/mol = 1550 kJ pro kg Methanol = 0,43 kWh pro kg Methanol wird aus dem entsprechenden Synthesereaktor 106 abgeführt. Typische Synthesebedingungen im Synthesereaktor 106 sind ca. 50 bar und ca. 270 °C, so dass die Reaktionswärme W1 auch genutzt werden kann, z.B. für eine in der Nähe befindliche Meerwasserentsalzungsanlage oder Heizungsanlage.

Vorzugsweise wird die Methanolsynthese unter Einsatz von Katalysatoren durchgeführt, um Reaktionstemperatur und -druck sowie Reaktionsdauer niedrig zu halten und um sicher zu stellen, dass als Reaktionsprodukt hochwertiges (reines) Methanol 108 entsteht.

In einer anderen bevorzugten Ausführungsform der Erfindung wird eine Methanolsynthese nach einem von Prof. George A. Olah propagierten Elektrolyseverfahren durchgeführt. Details hierzu können zum Beispiel dem Buch "Beyond Oil and Gas: The Methanol Economy", George A. Olah et al., Wiley-VCH, 1998, ISBN 0-471-14877-6, Kapitel 11, Seite 196 entnommen werden. Weitere Details sind auch der US-Patentanmeldung US 2009/0014336 A1 zu entnehmen. Prof. George A. Olah beschreibt die Methanolsynthese durch Elektrolyse von CO₂ und H₂O wie folgt:

CO₂ + 2 H2O - 682,01 kJ = CH₃OH + 1,5 O₂. (Reaktion 3)

Bei dieser Reaktion entstehen in einem Zwischenschritt CO und H₂ in einem Verhältnis von ungefähr 1:2. Das CO und H₂, das an einer Kathode entsteht, kann mit einem kupfer- oder nickelbasierten Katalysator zu Methanol umgesetzt werden. Der Syntheseweg nach Reaktion 3 ist mit einer theoretischen Zufuhr von 682,01 kJ = 0,189 kWh elektrischer Energie pro Mol erzeugtem Methanol 108 verbunden.

Falls sich die Silicon-Fire Anlage 100 in der Nähe einer CO₂-Quelle befindet, kann auf eine Verflüssigung für den Transport und auf den Transport selbst von CO₂ verzichtet werden. Ansonsten ist es nach dem Stand der Technik relativ einfach, das CO₂ zu verflüssigen und zu einer Silicon-Fire Anlage 100 zu bringen. Bei einem Verzicht auf Verflüssigung, ggf. Speicherung und Transport über längere Entfernung ist das CO₂ unter Berücksichtigung von CO₂-Vermeidungs-Gutschriften voraussichtlich kostenneutral verfügbar. Auch im Falle eines Transports sind die Kosten für das "Erwerben" des CO₂ relativ gering.

In Fig. 3 sind weitere Schritte eines ersten erfindungsgemäßen Verfahrens, respektive eines Teils einer Silicon-Fire Anlage 200 gezeigt. Vorzugsweise wird, wie bereits erwähnt, das Kohlendioxid 101 aus einem Verbrennungsprozess 201 (hier durch ein Feuer symbolisiert) oder einem Oxidationsprozess mittels CO₂-Abscheidung, z.B. mit einer Silicon-Fire Rauchgasreinigungsanlage 203, entnommen. Die Silicon-Fire Rauchgasreinigungsanlage 203 kann zum Beispiel nach dem Prinzip der Rauchgaswäsche aufgebaut sein, wobei das CO₂ durch eine Waschlösung aus dem Rauchgas 202 "herausgewaschen" wird. Besonders geeignet ist eine Rauchgaswäsche, die NaOH als Waschlösung einsetzt und in der das NaOH rezykliert wird. Details hierzu sind zum Beispiel der Parallelanmeldung EP 1 958 683 zu entnehmen, die am 7.8.2007 eingereicht wurde. Es können aber auch andere Prinzipien der CO₂-Abscheidung oder -gewinnung eingesetzt werden.

Die Silicon-Fire Rauchgasreinigungsanlage 203 ermöglicht es, CO₂ (hier als Wertstoff bezeichnet) aus dem Rauchgas 202 zu entnehmen. Dieses CO₂ wird dann direkt oder indirekt der Silicon-Fire Anlage 100 zugeführt, die dann unter Einsatz des CO₂ als Kohlenstofflieferant und unter Einsatz elektrischer Energie einen Kohlenwasserstoff (vorzugsweise Methanol 108) erzeugt/synthetisiert.

Fig. 4 zeigt in einer schematischen Blockdarstellung die wichtigsten Bausteine/Komponenten respektive Verfahrensschritte einer Silicon-Fire Anlage 100. Diese Anlage 100 ist so ausgelegt, dass ein Verfahren zum Bereitstellen speicherbarer und transportabler Energieträger 108 ausgeführt werden kann. Das entsprechende Verfahren basiert auf den folgenden grundlegenden Schritten.

Es wird Kohlenstoffdioxid 101 als Kohlenstofflieferant bereitgestellt, wie bereits beschrieben. Die erforderliche elektrische Gleichstromenergie E1 wird hier weitmöglich mittels erneuerbarer Energietechnik erzeugt und der Silicon-Fire Anlage 100 zur Verfügung gestellt. Besonders als erneuerbare Energietechnik geeignet sind Solarthermieanlagen 300 und Photovoltaikanlagen 400, die auf Solarmodulen basieren. Es ist auch möglich eine Kombination von beiden Anlagentypen 300 und 400 vorzusehen, da der Flächenbedarf, bezogen auf die elektrische Leistung, der Solarthermieanlage 300 kleiner ist als der einer Photovoltaikanlage 400.

Es wird gemäß Erfindung eine Elektrolyse 105 unter Einsatz der elektrischen Gleichstromenergie E1 durchgeführt, um Wasserstoff 103, oder Wasserstoffionen, als Zwischenprodukt zu erzeugen. Die Elektrolyse 105 kann gemäß den folgenden drei unterschiedlichen Ansätzen durchgeführt werden:
- Entweder handelt es sich um eine direkte Wasser-Elektrolyse nach Reaktion 1, wie in Fig. 4 dargestellt, oder
- es wird auf elektrolytischen Weg aus einer siliziumdioxidhaltigen Verbindung Silizium erzeugt, das dann in einer nachgelagerten Hydrolysereaktion mit Wasser 102 zu Wasserstoff 103 und Siliziumdioxid reagiert,
- oder es wird auf elektrolytischem Weg direkt Methanol 108 erzeugt (siehe Reaktion 3), wobei auch hier intermediär Wasserstoff, respektive Wasserstoffionen auftreten, die aber direkt mit den anderen Ionen oder Reaktionspartner zu Methanol 108 reagieren.

Bei den Verfahren, die nicht auf elektrolytischem Weg direkt Methanol 108 erzeugen, werden abschließend in der Anlage 100 Wasserstoff 103 und Kohlenstoffdioxid 101 zusammengeführt, um diese in einer Reaktion 106 umzusetzen zu Methanol 108, oder zu einem anderen Kohlenwasserstoff. Das Methanol 108 kann dann, wie durch den Pfeil 107 dargestellt, aus der Anlage 100 entnommen werden.

In Fig. 4 ist eine besonders bevorzugte Anlage 100 dargestellt, die so aufgebaut ist, dass sie die eingangs erwähnten Nachteile vermindert oder ausgleicht. Aus diesem Grund wird bei der erfindungsgemässen Silicon-Fire Anlage 100 vorzugsweise eine wirtschaftlich und ökologisch optimale Kombination regenerativer Stromversorgung (durch die Anlagen 300 und/oder 400) und konventioneller Stromversorgung, hier durch einen Teil eines Verbundnetzes 500 dargestellt, realisiert. Die Silicon-Fire Anlage 100 sieht daher in einer bevorzugten Ausführungsform vor, die regenerative elektrische Energie E1 weitgehend direkt entsprechend ihrem Anfall für chemische Reaktionen (hier die Elektrolysereaktion 105) zu nutzen und damit auch zu speichern. Ein weiterer Anteil der benötigten Energie wird aus dem Verbundnetz 500 bezogen. Dieser Anteil wird umgewandelt in Gleichstrom(energie) E2. Zu diesem Zweck kommt ein entsprechender Umwandler 501 zum Einsatz, wie in Fig. 4 in schematischer Form angedeutet. Die entsprechenden Anlagenteile oder -komponenten werden hier auch als Energieversorgungsanlage 501 bezeichnet.

Mittels einer intelligenten Anlagensteuerung 110 wird die Energieversorgung der Anlage 100 gesteuert und geregelt. Es wird im Prinzip der jeweils momentan verfügbare überschüssige Energieanteil E2 aus dem Verbundnetz 500 bezogen, während der andere Energieanteil (hier E1) soweit möglich aus einem Anlage bezogenen Solarkraftwerk 300 und/oder 400 (oder aus einem Windkraftwerk bezogen wird. Hier kommt es also zu einer intelligenten Umkehrung des bisherigen Prinzips, bei dem die Energieschwankungen erneuerbarer Energieanlagen 300, 400 durch Zu- und Abschalten konventioneller Anlagen abgefangen werden. Man braucht daher zum Betreiben einer Silicon-Fire Anlage 100 keine zusätzlichen Leistungs- und Frequenzregelkapazitäten für die regenerativen Kraftwerksanlagen im Verbundnetz 500 vorzuhalten. Dieses Prinzip ermöglicht es dem Betreiber einer Silicon-Fire Anlage 100, zusätzliche technische und wirtschaftliche Parameter bei der Steuerung der Anlage 100 einzubeziehen. Bei diesen Parametern handelt es sich um sogenannte Input-Größen I1, 12, usw., die von der Steuerung 110 in Entscheidungen einbezogen werden. Ein Teil der Parameter kann innerhalb der Steuerung 110 in einem Parameterspeicher 111 vorgegeben werden. Ein anderer Teil der Parameter kann von außen kommen. Hier können zum Beispiel Preis- und/oder Verfügbarkeitsinformationen vom Betreiber des Verbundnetzes 500 eingehen.

In der Anlagensteuerung 110 sind sogenannte software-basierte Entscheidungsprozesse implementiert. Ein Prozessor der Steuerung 110 führt eine Steuerungssoftware aus und fällt unter Berücksichtigung von Parametern Entscheidungen. Diese Entscheidungen werden umgesetzt in Schalt- oder Steuerungsbefehle, die zum Beispiel über Steuer- oder Signalleitungen 112, 113, 114 die Steuerung/Regelung von Energie- und Massenströmen bewirken.

Von der Seite des Verbundnetzes aus betrachtet handelt es sich bei der Silicon-Fire Anlage 100 um einen Verbraucher, der schnell zu- und abschaltbar ist und der relativ flexibel einsetzbar ist. Falls zum Beispiel Verbundnetzseitig ein plötzlicher Mehrbedarf an elektrischer Energie auftritt, so kann die Steuerung 110 den Anteil E2 herunterfahren oder ganz abschalten. In diesem Fall wird entweder ab diesem Moment entsprechend weniger Wasserstoff 103 produziert, falls Energie E1 zur Verfügung steht, oder es wird die Elektrolyse vorübergehend ganz eingestellt.

In Fig. 4 ist anhand von gestrichelten Pfeilen 112 angedeutet, die von der Steuerung 110 ausgehen, dass die Steuerung 110 die Energieströme E1 und E2 regelt. Die Pfeile 112 stellen Steuer- oder Signalleitungen dar. Es sind auch andere mögliche Steuer- oder Signalleitungen 113, 114 dargestellt. Die Steuer- oder Signalleitung 113 regelt zum Beispiel die CO₂-Menge, die für die Reaktion 106 zur Verfügung steht. Wenn zum Beispiel weniger Wasserstoff 103 produziert wird, da keine Energie E2 zur Verfügung steht, dann muss auch nur weniger CO₂ zugeführt werden. Die optionale Steuer- oder Signalleitung 114 kann zum Beispiel die H₂-Menge regeln. Eine solche Regelung ist zum Beispiel dann sinnvoll, wenn es einen Wasserstoff-Pufferspeicher gibt, dem man Wasserstoff 103 entnehmen kann, auch wenn im Moment kein Wasserstoff oder weniger Wasserstoff durch Elektrolyse 105 produziert wird.

Untersuchungen haben ergeben, dass es besonders wirtschaftlich und umwelttechnisch sinnvoll ist, wenn die Silicon-Fire Anlage 100 zwischen 15 und 50 % des elektrischen Energiebedarfs solar und den restlichen Energiebedarf aus dem Verbundnetz 500 (d.h. hauptsächlich fossil) bezieht. Ganz besonders bevorzugt ist es, zwischen 30 und 40 % des elektrischen Energiebedarfs solar und die restlichen 70 bis 60 % aus dem Verbundnetz 500 (d.h. hauptsächlich fossil) zu decken. Die intelligente Anlagensteuerung 110 wird entsprechend dieser Vorgaben eingestellt oder programmiert.

Besonders bevorzugt ist eine Ausführungsform der Anlage 100, die den Bezug kostengünstiger elektrischer Energie in den Schwachlastzeiten aus dem Verbundnetz 500 vorsieht.

Gemäß einer bevorzugten Ausführungsform der Erfindung ist die Anlagensteuerung 110 so eingestellt oder programmiert, dass die Vernetzung zwischen regenerativer elektrischer Energiequelle 300 und/oder 400 und elektrischem Verbundnetz 500 dahingehend optimiert ist, dass unter maximaler Ausnutzung der regenerativen elektrischen Energiequelle 300 und/oder 400 die Gesamtkosten der elektrischen Energie minimal werden.

Gemäß einer bevorzugten Ausführungsform der Erfindung ist die Anlagensteuerung 110 so eingestellt oder programmiert, dass die Vernetzung zwischen regenerativer elektrischer Energiequelle 300 und/oder 400 und elektrischem Verbundnetz 500 dahingehend optimiert ist, dass unter maximaler Ausnutzung der regenerativen elektrischen Energiequelle 300 und/oder 400 und unter Berücksichtigung der Gesamtkosten der elektrischen Energie und der Auslastungs- bzw. Betriebszeiten der Gesamtanlage 100 und deren Anlagenteile die Gesamtkosten des Kohlenwasserstoffproduktes 108 minimal werden.

Gemäß einer bevorzugten Ausführungsform der Erfindung ist die Anlagensteuerung 110 so eingestellt oder programmiert, dass die Vernetzung zwischen regenerativer elektrischer Energiequelle 300 und/oder 400 und elektrischem Verbundnetz 500 dahingehend optimiert ist, dass durch zeitweise Einspeisung der regenerativen Energiequelle 300 und/oder 400 in das elektrische Verbundnetz 500 zu dessen Spitzenzeiten Erlöse erzielt werden und dadurch die Gesamtkosten der elektrischen Energie für das erfindungsgemäße Verfahren oder die Gesamtkosten des Kohlenwasserstoffproduktes 108 verringert und möglichst minimal werden.

In Zeiten elektrischen Spitzenbedarfs des elektrischen Verbundnetzes 500 kann die regenerative Energie E1 - zur Erzielung höherer Erlöse - auch in das Verbundnetz eingespeist werden.

Die Aspekte dieser bevorzugten Ausführungsformen lassen sich problemlos durch eine entsprechende Auslegung der Steuerung 110 kombinieren.

Im Folgenden werden weitere grundlegende Aspekte eines erfindungsgemäßen Verfahrens zum Bereitstellen speicherbarer und transportabler Energieträger gezeigt. In diesem Verfahren werden Silizium 603, als ein erster speicherbarer und transportabler Energieträger, und Methanol 108, als ein zweiter speicherbarer und transportabler Energieträger, bereitgestellt. Das Verfahren umfasst mindestens die folgenden Schritte.

Durch eine Transformation wird siliziumdioxidhaltiges Ausgangsmaterial 601 mittels eines Reduktionsverfahrens 602 in elementares Silizium 603 umgewandelt, wie in Fig. 5 gezeigt. Das elementare Silizium 603 wird hier der der Einfachheit halber als Silizium bezeichnet. Die erforderliche elektrische (Primär)Energie E1 für dieses Reduktionsverfahren 602 wird gemäß Erfindung aus einer erneuerbaren Energiequelle 300 bereitgestellt. In einem nachgelagerten Schritt kann mindestens ein Teil des Siliziums 603 in einem Methanolherstellungsprozess eingesetzt werden. Bei diesem Prozess kommt zur Methanolherstellung z.B. Synthesegas aus Kohlendioxid 101 und Wasserstoff 103 zum Einsatz. Das Silizium 603 kann auch als Energieträger aus dem Verfahren entnommen werden. Das Silizium 603 kann zum Beispiel gelagert oder abtransportiert werden.

Die Transformation 602 ist vorzugsweise eine elektrochemische elektrolytische Transformation (unter Beteiligung von elektrischem Strom E1), wie in Fig. 5 schematisch angedeutet.

Bei der elektrochemischen Transformation 602 nach Fig. 5 wird die (Primär)Energie E1 für die Transformation durch Strom geliefert, der aus Sonnenlicht erzeugt wird. Für die elektrochemische Transformation 602 wird eine Solaranlage 300 eingesetzt, wie in Fig. 5 schematisch angedeutet.

Die elektrochemische Transformation 602 kann zum Beispiel durchgeführt werden, indem Siliziumdioxid als Elektrode eingesetzt wird. Als zweite Elektrode wird ein Metall eingesetzt. Als Elektrolyt setzt man zum Beispiel Calciumchlorid (CaCl₂) ein. Dieses elektrochemische Transformationsverfahren 602 funktioniert besonders gut mit einer porösen Siliziumdioxidelektrode, die zum Beispiel aus Siliziumdioxid gesintert sein kann. Details zu diesem Verfahren sind den folgenden Publikationen zu entnehmen:
- Nature materials 2003 Jun; 2(6):397-401, Nohira T, Yasuda K, Ito Y., Publisher: Nature Pub. Group.
- "New silicon production method with no carbon reductant", George Zheng Chen; D.J. Fray, T.W. Farthing, Tom W. (2000).
- "Direct electrochemical reduction of titanium dioxide to titanium in molten calcium chloride", George Zheng Chen, D.J. Fray, T.W. Farthing, Nature 407 (6802): 361-364. doi:10.1038/35030069
- Effect of electrolysis potential on reduction of solid silicon dioxide in molten CaCl₂, YASUDA Kouji; NOHIRA Toshiyuki; ITO Yasuhiko; The Journal of physics and chemistry of solids, ISSN 0022-3697, International IUPAC Conference on High Temperature Materials Chemistry No. 11, Tokyo , JAPON (19/05/2003), 2005, vol. 66, no 2-4 (491 p.);
- US 6540902 B1;
- WO 2006092615 A1.

Vorzugsweise wird ein Reduktionsverfahren 602 bei einer Temperatur von ca. 1900 K (= 1630 °C) durchgeführt, um das Siliziumdioxid 601 zu Silizium 603 zu reduzieren. Bei der elektrochemischen Transformation 602 hingegen werden deutlich geringere Temperaturen (vorzugsweise weniger als 500 °C) benötigt.

Im Zusammenhang mit den Figuren 6 und 7 wird beschrieben, wie Silizium 603 als Energieträger eingesetzt werden kann. Das reduzierte Silizium 603 ist ein energiereicher Stoff. Dieses Silizium hat die Tendenz mit Wasser in flüssiger oder dampfförmiger Form wieder zu Siliziumdioxid 604 zu oxidieren (Rückreaktion), wie in Fig. 6 schematisch gezeigt. Bei der sogenannten Hydrolyse 605 des Siliziums 603 wird Energie E3 (z.B. Wärmeenergie) frei, da es sich um eine exotherme Reaktion handelt. Zusätzlich zu dem Siliziumdioxid 604 entsteht Wasserstoff 1038, der zum Beispiel als Energieträger zur Herstellung von Methanol 108 eingesetzt werden kann. Vorzugsweise findet die Hydrolyse 605 bei erhöhten Temperaturen statt. Bevorzugt sind Temperaturen, die deutlich oberhalb von 100 °C liegen. Im Temperaturbereich zwischen 100 und 300 °C wird eine Umsetzung in brauchbaren Mengen dann erreicht, wenn das Silizium 603 in sehr feinkörniger oder pulvriger Konsistenz mit Wasserdampf 102 in Verbindung gebracht und durchmengt wird. Da Silizium 603 bis zu ca. 300 °C ansonsten nur eine sehr geringe Neigung zur Reaktion mit Wasser hat, wird vorzugsweise die Hydrolyse 605 bei Temperaturen im Temperaturbereich zwischen 300 und 600 °C durchgeführt.

Die Hydrolyse kann auch mit wässerigen Hydroxid- und Alkalikarbonatlösungen durchgeführt werden, wofür vorzugsweise Temperaturen zwischen 60 und 150 °C in Frage kommen.

Gemäß Erfindung wird in einem Verfahren nach Fig. 6 das Silizium 603 in einen Reaktionsbereich eingebracht und mit Wasser 102 in flüssiger oder dampfförmiger Form versetzt. Außerdem wird gemäß Erfindung dafür gesorgt, dass das Silizium 603 eine Mindesttemperatur aufweist. Entweder wird das Silizium 603 zu diesem Zweck erwärmt (z.B. mit Heizmitteln, oder durch wärmeerzeugende oder wärmeabgebende Zusatzstoffen), oder das Silizium 603 befindet sich bereits beim Einbringen auf einem entsprechenden Temperaturniveau.

Unter diesen Rahmenbedingungen wird dann in dem Reaktionsbereich Wasserstoff 103 als Gas freigesetzt. Der Wasserstoff 103 wird aus dem Reaktionsbereich entnommen.

Im Folgenden ist ein Zahlenbeispiel für ein Verfahren gemäß der Fig. 6 oder der gemäß der Fig. 5 in Kombination mit Fig. 6 gegeben:
1 Mol (= 60,1 g) SiO₂ bildet 1 Mol (= 28 g) Si. 1 Mol (= 28 g) Si bildet wiederum 1 Mol (= 451 g) H₂. D.h. 2,15 kg SiO₂ bilden 1 kg Si, und aus diesem 1 kg Si werden 1,6 m³ H₂ gebildet.

Die Methanolherstellung kann gemäß einem der bekannten und großtechnisch genutzten Verfahren durchgeführt werden. Bevorzugt ist ein Verfahren, bei dem ein Katalysator (z.B. ein CuO-ZnO-Cr₂O₃ oder ein Cu-Zn-Al₂O₃ Katalysator) eingesetzt wird.

Die Erfindung hat den Vorteil, dass bei der Reduktion des Siliziumdioxids und bei der Reduktion des Wassers 102 kein CO₂ freigesetzt wird, solange für diese Reaktionen nur Energie E1 eingesetzt wird, die aus einer Anlage 300 und/oder 400 stammt. Die erforderliche Energie wird daher mindestens zum Teil aus erneuerbaren Energiequellen, vorzugsweise aus Anlagen 300 und/oder 400, bereitgestellt.

Das elementare Silizium 603 wird vorzugsweise in Pulverform, oder in granularer oder körniger Form in der Hydrolyse 605 eingesetzt.

Gemäß Erfindung dient CO₂ 101 als Ausgangsstoff und Kohlenstofflieferant für die Methanolsynthese im Reaktor 106. Als CO₂-Quelle dienen vorzugsweise: Steam-Reforming-Anlagen, Erdgas-CO₂-Abscheidungsanlagen, Zementfabriken, Bio-Ethanol-Anlagen, Meerwasserentsalzungsanlagen, Kraftwerke und andere Anlagen oder Verbrennungsprozesse 201, die große Mengen an CO₂ emittieren.

Die Erfindung ermöglicht es, die erheblichen wirtschaftliche Nachteile bekannter Ansätze zu vermeiden, wenn - wie im Fall der Silicon-Fire Anlage 100 - die instationär anfallende elektrische Solar- und/oder Windenergie direkt in chemische Reaktionsenthalpie umgewandelt und chemisch gebunden gespeichert wird, ohne dass zusätzliche Kapazitäten für Reserveleistungen und/oder Frequenzregelung im Verbundnetz und die dafür erforderlichen Aufwendungen notwendig sind.

Bei photovoltaischer Stromerzeugung mittels einer Photovoltaikanlage 400 ist ein weiterer Vorteil, dass der aus den Solarzellen der Photovoltaikanlage 400 primär anfallende Gleichstrom E1 direkt für den chemischen Prozess (Elektrolyse 105) genutzt werden kann, ohne über Umrichter in Wechselstrom zur Spannungstransformation umgewandelt werden zu müssen.

**Bezugszeichen:**

| | |
|---|---|
| Fahrzeugindustrie / Automobilbau | 1 |
| Kraftwerksbetreiber | 2 |
| Windfarm | 3 |
| Silicon-Fire Anlage | 100 |
| Kohlenstoffdioxid | 101 |
| Wasser | 102 |
| Wasserstoff | 103 |
| Bereitstellen von Kohlenstoffdioxid | 104 |
| Durchführen einer Elektrolyse | 105 |
| Zusammenführen des Wasserstoffs | 106 |
| (H₂) und des Kohlenstoffdioxids / Synthesereaktor | |
| Abgeben/Bereitstellen von Methanol | 107 |
| transportabler Energieträger | 108 |
| (Anlagen-)Steuerung | 110 |
| Parameterspeicher | 111 |
| Steuer- oder Signalleitungen | 112, 113, 114 |
| Silicon-Fire Teilanlage | 200 |
| Verbrennungsprozess | 201 |
| Rauchgas mit CO₂ | 202 |
| Silicon-Fire Rauchgaswäsche | 203 |
| Reingas | 204 |
| CO₂-freier Kamin | 205 |
| Entnahme von CO₂ | 206 |
| Solarthermieanlage | 300 |
| Umwandlung von Wärme in Gleichstrom | 301 |
| Solaranlage (Photovoltaikanlage) | 400 |
| Verbundnetz | 500 |
| Umwandlung von Wechselspannung in Gleichstrom (Energieversorgungsanlage) | 501 |
| siliziumdioxidhaltiges | 601 |
| Ausgangsmaterial | |
| Silizium | 603 |
| Reduktionsverfahren | 602 |
| Siliziumdioxid als Rückreaktionsprodukt | 604 |
| Hydrolyse | 605 |
| Gleichstromenergie | E1 |
| Zusätzliche elektrische Energie | E2 |
| Energie | E3 |
| Inputgrößen | I1, I2, usw. |
| Primärenergie | P1, P2 |
| Reaktions(ab)wärme der Methanolsynthese | W1 |

## Patentansprüche

1. Verfahren zum Bereitstellen speicherbarer und transportabler Energieträger (108) mit den folgenden Schritten:
- Bereitstellen (104) von Kohlenstoffdioxid (CO₂; 101) als Kohlenstofflieferant,
- Bereitstellen von elektrischer Gleichstromenergie (E1), die mittels erneuerbarer Energietechnik (300, 400) erzeugt wird, Bereitstellen von zusätzlicher elektrischer Energie (E2), die aus einem mit fossilem Brennstoff betriebenen Kraftwerk oder aus einem elektrischen Verbundnetz (500) stammt, deren/dessen momentan geringe Auslastung es ermöglicht, die zusätzliche elektrische Energie (E2) bereit zu stellen.
- Durchführen einer Elektrolyse (105) unter Einsatz dieser elektrischen Gleichstromenergie (E1) und der zusätzlichen elektrischen Energie (E2), um Wasserstoff (H₂; 103) als Zwischenprodukt zu erzeugen,
- Zusammenführen (106) des Wasserstoffs (H₂; 103) und des Kohlenstoffdioxids (CO₂; 101), um dieses umzusetzen zu Methanol (108).

2. Verfahren nach Anspruch 1, **dadurch gekennzeichnet, dass** das Entnehmen von Kohlenstoffdioxid (CO₂; 101) aus einem Verbrennungsprozess (201) oder einem Oxidationsprozess mittels CO₂-Abscheidung (203) erfolgt.

3. Verfahren nach Anspruch 1 oder 2, **dadurch gekennzeichnet, dass** bei der Elektrolyse siliziumdioxidhaltiges Ausgangsmaterial (601) zu Silizium (603) reduziert wird.

4. Verfahren nach Anspruch 3, **dadurch gekennzeichnet, dass** Wasserstoff (H₂; 103) bereitgestellt wird, indem Silizium (603) mit Wasser (H₂O; 102) zur Reaktion (605) gebracht wird.

5. Verfahren nach Anspruch 1 oder 2, **dadurch gekennzeichnet, dass** es sich bei der Elektrolyse um eine Wasserelektrolyse (105) handelt, bei der direkt aus Wasser (H₂O; 102) Wasserstoff (H₂; 103) erzeugt wird.

6. Verfahren nach einem der vorhergehenden Ansprüche, **dadurch gekennzeichnet, dass** die Gleichstromenergie (E1) durch Sonnenlicht mittels einer Solarthermie-Anlage (400) und/oder einer Photovoltaikanlage (300) geliefert wird.

7. Verfahren nach einem der vorhergehenden Ansprüche, **dadurch gekennzeichnet, dass** das Silizium (603) als ein speicherbarer und transportabler Energieträger bereitgestellt wird und dass aus dem Kohlendioxid (101) und Wasserstoff (103) in dem Prozess (106) zur Methanolherstellung Methanol (108) als weiterer speicherbarer und transportabler Energieträger bereitgestellt wird.

8. Verfahren nach einem der vorhergehenden Ansprüche 1 bis 6, **dadurch gekennzeichnet, dass** Silizium (603) als ein speicherbarer und transportabler Energieträger bereitgestellt wird, wobei in einem weiteren Schritt (605) Wasser oder Wasserdampf mit dem Silizium (603) in Kontakt gebracht wird, um in einer Hydrolysereaktion (605) Wasserstoff (103), Siliziumdioxid (604) und eine Energiemenge (E3) bereit zu stellen.

9. Anlage (100) zum Bereiststellen eines speicherbaren und transportablen Energieträgers (108), mit
- einer Anlage (300, 301; 400) zum Erzeugen eines ersten Energieanteils in Form von Gleichstromenergie (E1) aus erneuerbaren Energiequellen,
- eine Energieversorgungsanlage (501) zum Anbinden der Anlage (100) an ein Verbundnetz (500), wobei die Energieversorgungsanlage (501) aus Wechselspannung des Verbundnetzes (500) einen zweiten Energieanteil in Form von Gleichstromenergie (E2) erzeugt,
- einer Vorrichtung (102, 105) zum Bereitstellen von Wasserstoff (103) als Zwischenprodukt, wobei ein Teil des Energiebedarfs dieser Vorrichtung (102, 105) durch den ersten Energieanteil und ein anderer Teil durch den zweiten Energieanteil gedeckt wird,
- einer Kohlendioxidzufuhr zum Einbringen von Kohlendioxid (101),
- einem Reaktionsbereich zum Herstellen eines Kohlenwasserstoffs, vorzugsweise von Methanol (108), wobei in dem Reaktionsbereich der Wasserstoff (103) mit dem Kohlendioxid (101) zur Reaktion gelangt,
- einer Entnahme (107) für den Kohlenwasserstoff.

10. Anlage (100) nach Anspruch 9, **dadurch gekennzeichnet, dass** sie eine Steuerung (110) umfasst, die dazu ausgelegt ist das Verhältnis zwischen dem ersten Energieanteil und dem zweiten Energieanteil zu steuern.

11. Anlage (100) nach Anspruch 10, **dadurch gekennzeichnet, dass** die Steuerung (110) die Einspeisung des zweiten Energieanteils aus dem Verbundnetz (500) regelt, wobei in einem software-basierten Entscheidungsprozess Parameter (I1, I2, usw.) seitens der Steuerung (110) berücksichtigt werden, die Informationen über die Verfügbarkeit der elektrischen Energie des Verbundnetzes (500) und/oder über wirtschaftliche Parameter repräsentieren.

12. Anlage (100) nach Anspruch 10 oder 11, **dadurch gekennzeichnet, dass** in der Steuerung (110) ein software-basierter Entscheidungsprozess implementiert ist, damit zwischen 15 und 50% des elektrischen Energiebedarfs durch den ersten Energieanteil und der restliche Energiebedarf aus dem Verbundnetz (500) gedeckt wird.

13. Anlage (100) nach Anspruch 10 oder 11, **dadurch gekennzeichnet, dass** in der Steuerung (110) ein software-basierter Entscheidungsprozess implementiert ist, damit zwischen 30 und 40% des elektrischen Energiebedarfs durch den ersten Energieanteil und die restlichen 70 bis 60% aus dem Verbundnetz (500) gedeckt werden.

14. Anlage (100) nach einem der Ansprüche 10 bis 11, **dadurch gekennzeichnet, dass** mit der Steuerung (110) über Steuer- oder Signalleitungen (112, 113, 114) Energie- und/oder Massenströme in der Anlage (100) geregelt und/oder gesteuert werden.
